Europäisches Patentamt

European Patent Office

Office européen des brevets

(19)

(11) Numéro de publication: **0 537 836 B1**

(12) **FASCICULE DE BREVET EUROPEEN**

(45) Date de publication de fascicule du brevet: **10.05.95**  (51) Int. Cl.⁶: **C01B 15/029**, B01J 23/44

(21) Numéro de dépôt: **92203072.1**

(22) Date de dépôt: **06.10.92**

(54) **Synthèse directe de peroxyde d'hydrogène par catalyse hétérogène.**

(30) Priorité: **14.10.91 BE 9100941**

(43) Date de publication de la demande:
**21.04.93 Bulletin 93/16**

(45) Mention de la délivrance du brevet:
**10.05.95 Bulletin 95/19**

(84) Etats contractants désignés:
**DE FR GB SE**

(56) Documents cités:
**EP-A- 0 337 446**
**EP-A- 0 342 047**
**WO-A-92/15521**

**DATABASE WPIL Week 8905, Derwent Publications Ltd., London, GB; AN 89-034442/05 & JP-A-63 283 752**

**IDEM**

(73) Titulaire: **SOLVAY INTEROX (Société Anonyme)**
**Rue du Prince Albert, 33**
**B-1050 Bruxelles (BE)**

(72) Inventeur: **Colery, Jean-Claude**
**Avenue de l'Escavée Rouge, 2**
**B-1325 Chaumont-Gistoux (BE)**
Inventeur: **van Weynbergh, Jacques**
**Avenue de la Bugrane, 71/13**
**B-1020 Bruxelles (BE)**

(74) Mandataire: **Decamps, Alain René François et al**
**SOLVAY & Cie S.A.**
**Département de la Propriété Industrielle**
**Rue de Ransbeek, 310**
**B-1120 Bruxelles (BE)**

EP 0 537 836 B1

Rank Xerox (UK) Business Services
(3.10/3.09/3.3.3)

## Description

La présente invention concerne un procédé pour la synthèse directe du peroxyde d'hydrogène à partir d'hydrogène et d'oxygène. Elle s'adresse plus particulièrement à un procédé pour la synthèse de peroxyde d'hydrogène par catalyse hétérogène.

Dans le brevet US-4279883 (TOKUYAMA SODA), on divulgue un procédé de synthèse directe de peroxyde d'hydrogène à partir d'hydrogène et d'oxygène en présence d'un catalyseur solide métallique choisi parmi le palladium, le platine, le ruthénium ou un alliage de ces métaux dans un milieu réactionnel aqueux acide contenant un bromure à titre de promoteur ou d'inhibiteur de décomposition du peroxyde formé. Le métal du catalyseur peut être supporté sur un support approprié qui peut être choisi parmi une gamme de supports très différents. Selon les exemples, on utilise l'acide silicique hydraté.

Dans ce procédé connu, un problème majeur à résoudre consiste à limiter la dissolution du catalyseur dans le milieu réactionnel acide et d'éviter autant que possible l'usure du catalyseur par attrition.

La demande de brevet EP-A2-0337446 (PHILLIPS PETROLEUM COMPANY) divulgue un procédé de préparation d'une composition catalytique pour l'oxydation du CO en $CO_2$ par réduction au moyen d'hydrogène gazeux à une température de 100 à 600°C de Pt et/ou Pd imprégné sur de la zircone (résumé et page 2, lignes 26 à 39).

La demande de brevet EP-A2-0342047 (E.I. DU PONT DE NEMOURS) divulgue un procédé pour la synthèse directe de peroxyde d'hydrogène, par réaction d'hydrogène et d'oxygène gazeux dans un milieu réactionnel aqueux en présence d'un catalyseur comprenant du Pt, du Pd ou une combinaison de Pt et de Pd et des ions $H^+$ et $Br^-$, chacun d'eux se trouvant, indépendamment l'un de l'autre, en concentration d'environ 0.001 M à environ 0.05 M dans le milieu aqueux (revendication 1, page 5).

La présente invention a pour objet un procédé de synthèse directe de peroxyde d'hydrogène à partir d'hydrogène et d'oxygène qui présente une efficacité élevée couplée à une faible dissolution dans le milieu réactionnel et un taux d'attrition peu élevé.

A cet effet, l'invention concerne un procédé pour la synthèse directe d'une solution aqueuse de peroxyde d'hydrogène à partir d'hydrogène et d'oxygène par catalyse hétérogène dans un système triphasique selon lequel on fait réagir directement l'hydrogène et l'oxygène à l'état gazeux sous une pression supérieure à la pression atmosphérique à la surface d'un catalyseur hétérogène solide mis en suspension à l'état de granules dans une phase aqueuse liquide, le catalyseur étant constitué d'un composé métallique choisi parmi le palladium pur ou une association de palladium avec au moins un autre métal noble et le composé métallique étant déposé sur un support comprenant au moins un composé choisi parmi le dioxyde de zirconium ou le dioxyde de zirconium superacide.

Par synthèse directe d'une solution aqueuse de peroxyde d'hydrogène, on entend désigner la synthèse de solutions d'$H_2O_2$ dans l'eau à partir de ses éléments, à savoir l'oxygène et l'hydrogène. Selon l'invention, ces deux réactifs sont mis en oeuvre dans des conditions de température et de pression réglées pour qu'ils se présentent à l'état gazeux, la pression étant toutefois choisie supérieure à la pression atmosphérique.

Le catalyseur conforme au procédé selon l'invention appartient à la classe des catalyseurs solides utilisés en catalyse hétérogène, c'est-à-dire une catalyse qui s'exerce à l'interface entre le solide catalytique et une ou plusieurs autres phases contenant les réactifs. Selon l'invention, le catalyseur solide est maintenu en suspension sous forme de granules dans une phase aqueuse liquide capable de recueillir et de solubiliser le peroxyde d'hydrogène formé. Les deux réactifs gazeux, oxygène et hydrogène, sont mis en contact avec le catalyseur en suspension dans la solution. Le catalyseur est par ailleurs constitué de palladium pur ou, de manière alternative et non préférée, d'une association de palladium avec un autre métal noble. Le palladium ou l'association de palladium est en outre déposé sur un support constitué d'un oxyde de zirconium ou d'un oxyde de zirconium superacide. Par palladium pur, on entend désigner un métal titrant plus de 99,90 % en poids de palladium.

Lorsque le catalyseur est constitué d'une association de palladium avec un autre métal noble, il convient que l'autre métal noble soit réparti de façon homogène dans la masse du palladium. La répartition homogène de l'autre métal noble peut être réalisée à l'échelle atomique, par exemple lorsque l'association se présente sous la forme d'un alliage homogène. La répartition de l'autre métal noble peut aussi être réalisée à une échelle plus macroscopique comme, par exemple, la dispersion de petits agglomérats de l'autre métal noble dans le palladium, ou encore la formation d'une fine couche d'enrobant de l'autre métal noble autour des grains de palladium. L'autre métal noble sera de préférence choisi parmi le platine, le rhodium et l'or. Il peut aussi consister en un mélange de ces métaux. Parmi ces métaux nobles, l'or est particulièrement préféré. La proportion en poids de l'autre métal noble dans l'association peut varier dans de larges limites. Il est avantageux qu'elle n'excède pas 80 % du poids total des métaux du catalyseur et, de préférence, 60 % du poids total de ces métaux.

Le support du catalyseur comprend, selon l'invention, au moins un composé choisi parmi le dioxyde de zirconium ou le dioxyde de zirconium superacide ou un mélange de ces oxydes. Par dioxyde de zirconium superacide on entend désigner du dioxyde de zirconium présentant à la surface de ses granules des sites acides de Lewis et/ou de Brönsted obtenus au moyen d'un pré-traitement thermique avec un sulfate inorganique. Le catalyseur de palladium pur déposé sur un support à'oxyde de zirconium a donné d'excellents résultats.

Le support du catalyseur peut aussi comprendre, en plus du composé choisi parmi le dioxyde de zirconium ou le dioxyde de zirconium superacide, un autre composé connu pour ses bonnes propriétés de support pour catalyseur. Des exemples de ces autres composés sont le $SiO_2$, le SiC et l'$Al_2O_3$. Le $SiO_2$ est préféré, en particulier les associations $ZrO_2$ - $SiO_2$ et, parmi celles-ci, celles contenant plus de 50 % en poids de $ZrO_2$ et, de préférence, plus de 60 %. Par association, on entend désigner un mélange intime des deux composants à une échelle telle que plus de 95 % des granules de support contiennent chacun du $ZrO_2$ et du $SiO_2$ en proportions pondérales telles qu'elles ne s'écartent pas de plus de 20 % en poids de la valeur moyenne de la proportion du $ZrO_2$ et de la valeur moyenne de la proportion du $SiO_2$ dans la totalité des granules de support mis en oeuvre.

La proportion pondérale de palladium ou d'association de palladium avec un autre métal noble par rapport au support doit, dans le catalyseur conforme au procédé selon l'invention, se situer dans la gamme comprise entre 0,1 et 15 g de métaux nobles pour 100 g du poids total de métaux nobles et de support. De préférence, cette proportion se situera dans la gamme comprise entre 0,2 et 10 g de métal noble pour 100 g du poids total de catalyseur.

La granulométrie que présente le catalyseur exerce une influence sur les performances obtenues. Une diminution de la taille des granules de catalyseur a pour résultat l'augmentation de l'efficacité de celui-ci, c'est-à-dire la réduction de l'importance des phénomènes de diffusion intraparticulaire ainsi qu'une augmentation du taux de conversion des réactifs et une diminution de la sélectivité.

Le choix de la taille des particules de catalyseur sera donc le résultat d'une optimisation : cette taille devra être suffisamment petite pour assurer une bonne efficacité et une bonne conversion des réactifs mais ne pourra cependant devenir trop faible sous peine de donner lieu à des difficultés de filtration. En pratique, on sélectionnera des granules de catalyseur qui présentent un diamètre moyen dans la plage comprise entre 0,5 et 4000 $\mu$m et, de préférence, entre 1 et 200 $\mu$m. Par ailleurs, le volume poreux de ces granules de catalyseur doit être suffisamment élevé pour assurer une surface de contact solide - gaz élevée. Généralement, il convient de choisir des catalyseurs dont le volume poreux des granules est compris entre 0,01 et 1,5 $cm^3$/g et, de préférence, entre 0,1 et 1,2 $cm^3$/g.

La quantité optimale de catalyseur à mettre en oeuvre sera celle qui correspond à la limite entre la zone de contrôle chimique de la réaction et la zone de contrôle diffusionnel. En pratique, cette limite correspond généralement à une quantité de palladium ou d'association de palladium avec un autre métal noble comprise entre 50 et 150 mg Pd/l de phase liquide et, de préférence entre 75 et 110 mg Pd/l.

Outre leurs propriétés catalytiques pour la réaction de synthèse directe du peroxyde d'hydrogène, les catalyseurs au palladium sont malheureusement aussi des catalyseurs de décomposition du peroxyde formé. Il est dès lors avantageux que la phase liquide contienne un composé capable d'empoisonner les sites de décomposition du peroxyde d'hydrogène présents à la surface du catalyseur. Les ions halogénures sont de bons représentants de ces composés. Leur concentration optimale doit être déterminée au moyen d'essais de laboratoire à la portée de l'homme du métier. Cette concentration doit être suffisante pour parvenir à empoisonner la majorité des sites de décomposition du catalyseur et, dans le même temps, pas trop élevée de façon à éviter autant que faire se peut la réaction d'oxydation de l'ion halogénure par le peroxyde d'hydrogène. Les ions chlorure, bromure et iodure conviennent pour inhiber les sites de décomposition du catalyseur. L'ion bromure a donné les meilleurs résultats en concentration comprise entre 0,05 et 3 mmoles/l de phase liquide et, de préférence, entre 0,1 et 2 mmoles/l.

Il est avantageux que la phase liquide contienne en outre un acide dans le but d'inhiber la décomposition spontanée non catalytique du peroxyde d'hydrogène, notamment celle qui s'effectue selon l'équation :

$$HO_2^- + H_2O_2 \rightarrow H_2O + O_2 + OH^-$$

Toutefois, lorsque cette concentration est trop élevée, la solubilité des gaz dans la phase liquide diminue et l'acide peut réagir avec le peroxyde d'hydrogène présent. Comme acides qui conviennent bien, on peut citer l'acide sulfurique et l'acide orthophosphorique. L'acide orthophosphorique est préféré en raison de l'absence de corrosion des surfaces métalliques. Le pH de la phase liquide se situe en général entre 0 et 4 et, de préférence, entre 0,5 et 1,5.

3

La température de la réaction est habituellement choisie à une valeur comprise entre 5 et 90°C et, de préférence entre 10 et 60°C.

La pression est choisie supérieure à la pression atmosphérique et est généralement comprise entre 50 et 200 bars et, de préférence entre 65 et 100 bars.

Les exemples suivants sont donnés pour illustrer l'invention, sans pour autant en limiter la portée. Les exemples 2R, 3R, 4R, 8R, 9R et 10R sont donnés à titre de comparaison et ne sont pas conformes à l'invention. L'example 1 décrit la préparation d'un catalyseur utilisable dans le procédé de l'invention. Les exemples 5 à 7 et 11 à 16 ont été réalisés conformément à l'invention.

Exemple 1 : (Préparation du catalyseur)

Dans un becher de 1000 ml contenant 450 ml d'eau déminéralisée, on a dissous 100 g de $ZrOCl_2.8H_2O$ (soit l'équivalent de 38,2 g de $ZrO_2$). Après avoir ajouté 60 ml d'une solution aqueuse concentrée d'ammoniaque à 25 % en poids et porté ainsi le pH à 8,47 pour précipiter l'hydroxyde de zirconium, on a soumis la suspension à une agitation au moyen d'un barreau magnétique durant 30 minutes.

On a ensuite mis le précipité à mûrir dans une étuve réglée à 50 °C pendant 1,5 heure puis laissé décanter 20 heures à température ambiante.

Après filtration sous vide sur filtre en acétate de cellulose de 0,45 $\mu$m de section d'arrêt de marque MILLIPORE® suivi de quatre lavages successifs à l'eau déminéralisée à 40 °C, on a séché le précipité pendant 4 jours à 100 °C en étuve à vide. Après trois jours de séchage, le précipité a été broyé puis réintroduit en étuve pour parfaire le séchage. Il a ensuite été calciné dans un four pendant 3 heures à 600 °C.

On a alors pesé 3 g de la poudre calcinée d'oxyde de zirconium obtenue que l'on a mélangés avec 0,4 ml d'une solution de $PdCl_2$ à 2 % en poids dans l'HCl N. On a ensuite séché à l'étuve sous vide durant 16 heures à 100 °C.

La poudre d'oxyde de zirconium imprégnée de $PdCl_2$ a ensuite été soumise à réduction du $PdCl_2$ à 150 °C sous un courant gazeux constitué d'un mélange d'hydrogène et d'azote contenant 10 % d'hydrogène en volume pendant 1,2 heure. Après refroidissement à température ambiante, le catalyseur a été conservé dans un récipient en verre fermé.

Exemples 2R, 3R, 4R, 5, 6 et 7 : (Dissolution du support dans la solution de travail)

Dans un becher on a mélangé 40 mg de support de catalyseur avec 40 ml d'une solution 1,5 M en $H_3PO_4$ et 0,1 mM en NaBr. On a poursuivi l'agitation pendant 2 heures à 25 °C et on a ensuite dosé la quantité de métal dissoute dans la solution. Les résultats ont été les suivants :

| Exemple No | Support | % de métal dissous par heure |
|---|---|---|
| 2R | $SiO_2.Al_2O_3$ (NORTON® SA 3235) | 27 (en Al) |
| 3R | $SiO_2$ (SOLVAY CATALYSTS® K 2991) | 0,2 (en Si) |
| 4R | $Al_2O_3$ $\alpha$ (JOHNSON MATTHEY® CH 10372/01) | 2,8 (en Al) |
| 5 | $ZrO_2$ (HARSHAW® Zr 0304 T1/8) | 0,07 (en Zr) |
| 6 | $ZrO_2$ selon l'exemple 1 | 0,09 (en Zr) |
| 7 | $ZrO_2$ selon l'exemple 1 | 0,06 (en Zr) |

Exemples 8R, 9R, 10R et 11 : (Résistance du support de catalyseur à l'attrition)

On a introduit 10 g de support de catalyseur dans le bol conique d'un mélangeur de marque HAMILTON BEACH® équipé intérieurement de quatre déflecteurs constitués chacun d'un ensemble de 3 tiges verticales de section cylindrique de 3 mm de diamètre et d'un agitateur à hélice à quatre pales de 22 mm de diamètre entraîné par un moteur électrique tournant à 13000 tours/min. On a ensuite introduit dans le bol du mélangeur 500 ml de n-butanol et on a démarré l'agitation que l'on a poursuivi pendant 60 minutes.

A la fin de la période d'agitation, on a prélevé 50 ml de suspension de support de catalyseur dans le n-butanol, tout en maintenant l'agitation, au moyen d'une pipette jaugée de 50 ml dont on a introduit la pointe au ras d'un déflecteur en contrôlant la profondeur de prélèvement de manière à rester à un niveau

4

supérieur à celui de l'hélice.

On a ensuite analysé la suspension prélevée au moyen d'un granulomètre à laser de marque MALVERN® en utilisant le même solvant (n-butanol) que celui employé lors de l'usure du support de catalyseur dans le mélangeur. On a aussi recommencé l'analyse granulométrique d'une suspension de support de catalyseur frais n'ayant pas subi de traitement d'usure.

Les résultats de diamètre moyen fournis par le granulomètre MALVERN® ont été utilisés pour calculer un indice d'attrition défini comme suit :

$$\text{Indice d'attrition} = \frac{[D,v(0,5)]_i - [D,v(0,5)]_f}{[D,v(0,5)]_i} \times 100$$

où $[D,v(0,5)]_i$ représente le diamètre moyen initial avant usure correspondant à une fréquence de présence de 50 %, et $[D,V(0,5)]_f$ le même diamètre en fin d'essai, après usure.

Les résultats du calcul de l'indice d'attrition pour différents supports de catalyseur sont donnés au tableau qui suit.

| No Exemple | Nature du support | Indice d'attrition, % |
|---|---|---|
| 8R | Alumine $\alpha$ (JOHNSON MATTHEY® CH 10372/01) | 85 |
| 9R | Carbure de silicium (PECHINEY® NO lot 60/1) | 21 |
| 10R | Silice - Alumine (NORTON® SA 3235) | 21 |
| 11 | Oxyde de zirconium selon l'exemple 1 | 11 |

Exemples 12 à 16 : (synthèse de $H_2O_2$)

Dans un tube à essai en verre on a pesé une certaine quantité de catalyseur et on a ajouté 40 ml d'une solution aqueuse contenant de l'acide orthophosphorique 0,0006 M en NaBr. On a ensuite procédé à la pesée du tube contenant la solution.

Le tube à essai a été introduit dans un autoclave thermostatisé muni d'un agitateur, d'un thermocouple et d'un tube d'alimentation en gaz en polytétrafluoréthylène qui plongent tous les trois dans la solution réactionnelle contenue dans le tube à essai.

Après fermeture de l'autoclave, on a admis de l'hydrogène et de l'oxygène en mélange dans l'autoclave de telle sorte que le mélange contenait 4,5 % en moles d'hydrogène (soit un rapport molaire $O_2/H_2$ de 21). Les deux gaz ont été prémélangés dans des débitmètres massiques.

La pression de la réaction a été maintenue à 80 bars au moyen d'une vanne de régulation placée en aval de l'autoclave. Le débit du mélange gazeux a été fixé à 100 l/h dans les conditions normales, la vitesse d'agitation à 1200 tours par minute et la durée de l'essai à 120 minutes.

A la fin de l'essai, on a titré le peroxyde d'hydrogène par iodométrie et on a calculé la sélectivité de la réaction par rapport à l'hydrogène mis en oeuvre sur base du gain en poids de la solution.

La sélectivité par rapport à l'hydrogène mis en oeuvre est définie comme étant le nombre de moles de $H_2O_2$ formées par rapport au nombre de moles d'hydrogène consommées.

Exemple 12 :

| | |
|---|---|
| Catalyseur : | Pd sur $ZrO_2$ (2 % Pd) de marque HARSHAW® et de type Zr 0304 T1/8 |
| Température : | 25 °C |
| Concentration en $H_3PO_4$ : | 0,1 M |
| Poids de catalyseur : | 100 mg |
| Concentration pondérale en $H_2O_2$ en fin d'essai : | 46 g/kg |
| Sélectivité par rapport à l'hydrogène : | 85 % |

Exemple 13 :

| | |
|---|---|
| Catalyseur : | Pd sur $ZrO_2$ (2 % Pd) préparé selon l'exemple 1 |
| Température : | 25°C |
| Concentration en $H_3PO_4$ : | 0,05 M |
| Poids de catalyseur : | 100 mg |
| Concentration pondérale en $H_2O_2$ en fin d'essai : | 40 g/kg |
| Sélectivité par rapport à l'hydrogène : | 83 % |

Exemple 14 :

| | |
|---|---|
| Catalyseur : | Pd sur $ZrO_2$ (3 % Pd) de marque HARSHAW® et de type Zr 0304 T1/8 |
| Température : | 35°C |
| Concentration en $H_3PO_4$ : | 1,6 M |
| Poids de catalyseur : | 67 mg |
| Concentration pondérale en $H_2O_2$ en fin d'essai : | 43 g/kg |
| Sélectivité par rapport à l'hydrogène : | 92 % |

Exemple 15 :

| | |
|---|---|
| Catalyseur : | Pd sur $ZrO_2$ (3 % Pd) de marque HARSHAW® et de type Zr 0304 T1/8 |
| Température : | 45°C |
| Concentration en $H_3PO_4$ : | 1,6 M |
| Poids de catalyseur : | 67 mg |
| Concentration pondérale en $H_2O_2$ en fin d'essai : | 60 g/kg |
| Sélectivité par rapport à l'hydrogène : | 87 % |

Exemple 16 :

| | |
|---|---|
| Catalyseur : | Pd sur $ZrO_2$ (3 % Pd) de marque HARSHAW® et de type Zr 0304 T1/8 |
| Température : | 55°C |
| Concentration en $H_3PO_4$ : | 1,6 M |
| Poids de catalyseur : | 67 mg |
| Concentration pondérale en $H_2O_2$ en fin d'essai : | 67 g/kg |
| Sélectivité par rapport à l'hydrogène : | 78 % |

**Revendications**

1. Procédé pour la synthèse directe d'une solution aqueuse de peroxyde d'hydrogène à partir d'hydrogène et d'oxygène par catalyse hétérogène dans un système triphasique selon lequel on fait réagir directement l'hydrogène et l'oxygène à l'état gazeux sous une pression supérieure à la pression atmosphérique à la surface d'un catalyseur hétérogène solide mis en suspension à l'état de granules dans une phase aqueuse liquide, le catalyseur étant constitué d'un composé métallique choisi parmi le palladium pur ou une association de palladium avec au moins un autre métal noble, caractérisé en ce que le composé métallique est déposé sur un support comprenant au moins un composé choisi parmi le dioxyde de zirconium ou le dioxyde de zirconium superacide.

2. Procédé selon la revendication 1, caractérisé en ce que le support est constitué de $ZrO_2$.

3. Procédé selon la revendication 1, caractérisé en ce que le support est constitué de l'association $ZrO_2$ - $SiO_2$.

4. Procédé selon la revendication 2, caractérisé en ce que le catalyseur est constitué de palladium pur déposé sur un support de $ZrO_2$.

5. Procédé selon la revendication 2, caractérisé en ce que le catalyseur est constitué de palladium pur déposé sur un support d'une association $ZrO_2$ - $SiO_2$.

6. Procédé selon l'une quelconque des revendications 1 à 5, caractérisé en ce que, dans le catalyseur, la quantité de palladium ou d'association du palladium avec au moins un autre métal noble est comprise entre 0,1 et 15 g par 100 g du poids total de métal et de support et, de préférence, entre 0,2 et 10 g par 100 g de ce poids.

7. Procédé selon l'une quelconque des revendications 1 à 6, caractérisé en ce que le catalyseur se présente sous la forme de petits granules dont le diamètre moyen est compris entre 0,5 et 4000 $\mu$m et le volume poreux est compris entre 0,1 et 1,2 $cm^3$/g.

8. Procédé selon l'une quelconque des revendications 1 à 7, caractérisé en ce que la phase aqueuse liquide contient des ions bromure en concentration comprise entre 0,05 et 3 mmoles/litre de phase aqueuse et que son pH est situé dans la plage comprise entre 0 et 4.

**Claims**

1. Method for direct synthesis of an aqueous solution of hydrogen peroxide from hydrogen and oxygen by heterogeneous catalysis in a three-phase system according to which hydrogen and oxygen are directly reacted in the gaseous state at a pressure greater than atmospheric pressure at the surface of a solid heterogeneous catalyst suspended in the granular state in a liquid aqueous phase, the catalyst consisting of a metal compound chosen from pure palladium or a combination of palladium with at least one other noble metal, characterised in that the metal compound is deposited on a support comprising at least one compound chosen from zirconium dioxide and superacidic zirconium dioxide.

2. Method according to Claim 1, characterised in that the support consists of $ZrO_2$.

3. Method according to Claim 1, characterised in that the support consists of the combination $ZrO_2$-$SiO_2$.

4. Method according to Claim 2, characterised in that the catalyst consists of pure palladium deposited on a $ZrO_2$ support.

5. Method according to Claim 2, characterised in that the catalyst consists of pure palladium deposited on a $ZrO_2$-$SiO_2$ combination support.

6. Method according to any one of Claims 1 to 5, characterised in that, in the catalyst, the quantity of palladium or of the combination of palladium with at least one other noble metal is between 0.1 and 15 g per 100 g of the total weight of metal and support and, preferably, between 0.2 and 10 g per 100 g of this weight.

7. Method according to any one of Claims 1 to 6, characterised in that the catalyst is in the form of small granules whose mean diameter is between 0.5 and 4000 $\mu$m and the pore volume is between 0.1 and 1.2 $cm^3$/g.

8. Method according to any one of Claims 1 to 7, characterised in that the liquid aqueous phase contains bromide ions at a concentration of between 0.05 and 3 mmol/litre of aqueous phase and that its pH is in the range between 0 and 4.

**Patentansprüche**

1. Verfahren zur Direktsynthese einer wäßrigen Wasserstoffperoxid-Lösung ausgehend von Wasserstoff und Sauerstoff durch heterogene Katalyse in einem Drei-Phasen-System, gemäß dem man Wasserstoff und Sauerstoff in gasförmigem Zustand unter einem Druck, der höher als der Atmosphärendruck ist, auf der Oberfläche eines festen heterogenen Katalysators, der im Granulat-Zustand in einer flüssigen wäßrigen Phase suspendiert ist, direkt reagieren läßt, wobei der Katalysator aus einer metallischen Verbindung besteht, die unter reinem Palladium oder einer Palladium-Verbindung mit wenigstens einem anderen Edelmetall ausgewählt ist, dadurch gekennzeichnet, daß die metallische Verbindung auf einem Träger abgeschieden ist, der wenigstens eine unter dem Zirkondioxid oder dem supersauren Zirkondioxid ausgewählte Verbindung umfaßt.

2. Verfahren gemäß Anspruch 1, dadurch gekennzeichnet, daß der Träger aus $ZrO_2$ besteht.

3. Verfahren gemäß Anspruch 1, dadurch gekennzeichnet, daß der Träger aus der Verbindung $ZrO_2$ - $SiO_2$ besteht.

4. Verfahren gemäß Anspruch 2, dadurch gekennzeichnet, daß der Katalysator aus reinem Palladium besteht, das auf einem $ZrO_2$-Träger abgeschieden ist.

5. Verfahren gemäß Anspruch 2, dadurch gekennzeichnet, daß der Katalysator aus reinem Palladium besteht, das auf einem Träger aus einer $ZrO_2$ - $SiO_2$ -Verbindung abgeschieden ist.

6. Verfahren gemäß irgendeinem der Ansprüche 1 bis 5, dadurch gekennzeichnet, daß die Menge an Palladium oder der Palladium-Verbindung mit wenigstens einem anderen Edelmetall im Katalysator zwischen 0,1 und 15 g pro 100 g des Gesamtgewichts von Metall und Träger, und vorzugsweise zwischen 0,2 und 10 g pro 100 g dieses Gewichts beträgt.

7. Verfahren gemäß irgendeinem der Ansprüche 1 bis 6, dadurch gekennzeichnet, daß der Katalysator in Form kleiner Körnchen vorliegt, deren mittlerer Durchmesser zwischen 0,5 und 4000 $\mu$m liegt und deren Porenvolumen zwischen 0,1 und 1,2 $cm^3$/g beträgt.

8. Verfahren gemäß irgendeinem der Ansprüche 1 bis 7, dadurch gekennzeichnet, daß die flüssige wäßrige Phase Bromidionen in einer Konzentration zwischen 0,05 und 3 mmol/Liter der wäßrigen Phase enthält und daß ihr pH in dem Bereich zwischen 0 und 4 liegt.